# EUROPEAN PATENT SPECIFICATION

(11) **EP 3 203 593 B1**
(45) Date of publication and mention of the grant of the patent: **26.09.2018**
(21) Application number: 16169917.8
(22) Date of filing: 17.05.2016
(51) Int. Cl.: H01R 35/04, H01R 24/68, H01R 13/66

(54) **ADAPTER**
ADAPTER
ADAPTATEUR

(30) Priority: 04.02.2016 KR 20160013867
(43) Date of publication of application: 09.08.2017
(73) Proprietor: Samsung Electronics Co., Ltd., Gyeonggi-do 16677 (KR)
(72) Inventor: KIM, Tae Hyuck, Seoul (KR); ANN, Sung Jin, Seoul (KR); KIM, Tae Hun, Seoul (KR); CHOI, Jin Ho, Seoul (KR); SEO, Chang Geun, Incheon (KR); WOO, Won Myung, Seoul (KR); HA, Ka San, Gyeonggi-do (KR); PARK, Sun Jin, Seoul (KR)
(74) Representative: Appleyard Lees IP LLP

(56) References cited:
- US-A1- 2003 045 143
- US-A1- 2013 105 595
- US-B1- 6 364 716

## Description

### BACKGROUND

### 1. Field

Apparatuses consistent with exemplary embodiments of the present disclosure relate to an adapter having a rotation structure configured to allow a plug to be rotatable.

### 2. Description of Related Art

In general, electronic devices have a different voltage according to the type of the electronic devices and the use thereof, and also the shape of an input unit in which the power is supplied is different according to each product.

Therefore, it may be needed that a voltage of the power that is appropriate to be used for the electronic device is supplied to supply the power to the electronic device, through a connector having the shape that is appropriate for the input unit/ the shape that corresponds to the input unit, and a device configured to perform this function is an adapter that is power conversion supply apparatus.

Particularly, a power adapter has been widely used as a device configured to convert alternating current (AC) to direct current (DC) and supply DC to a variety of electronic devices using DC, e.g., a lap top, a PC, a display monitor, and a mobile phone. In addition, the power adapter has been used as a device configured to charge a battery or supply the power needed for the driving of the electronic devices, and a device configured to generate an output power from an input power.

The power adapter is provided with a body in which an AC/DC conversion voltage circuit is housed, a plug connected to a power electric outlet, and a connector connected to an electronic device, and is configured to convert a high voltage of AC into an appropriate voltage of DC and supply DC to the electric device.

When the power adapter is connected to a multi tap outlet, interference may occur with an adjacent electric outlet and thus there may be limitation in the usability of the multi tap outlet.

US6364716 describes an adapter according to the preamble of claim 1.

### SUMMARY

In accordance with the invention, an adapter according to claim 1 is provided.

One or more exemplary embodiments also provide an adapter configured to improve user convenience by using a plug that is rotatable by angle and by step by step.

The cover includes at least one wire hole through which the at least one wire extends.

The adapter includes a printed circuit board (PCB) provided in the interior of the case; and at least one wire connecting the connection pin to the PCB.

The at least one wire may include two wires that are twisted with each other at least one twist inside the wire accommodation unit.

The rotation member may include at least one rotation protrusion provided at an outer circumferential surface of the rotation member, and the guide member may include at least one rotation protrusion groove configured to receive the at least one rotation protrusion.

The case may include a case body and a case base configured to cover an opening formed in the case body, and the installation hole is formed within the case base.

The rotation member may include a first position indicator provided on an exterior surface of the rotation member, and the case may include at least one second position indicator provided on an exterior surface the case, the first position indicator and the at least one second position indicator being configured to indicate a rotation angle of the rotation member.

The at least one second position indicator may include two indicators spaced apart by 90 degrees. The adapter may further include a plug configured to be coupled to the connection pin.

The rotation member may include at least one rotation groove unit provided at an outer circumferential surface of the rotation member, and the guide member may include at least one rotation protrusion unit disposed on a rotation path of the rotation groove unit, the at least one rotation groove unit being configured to receive the at least one rotation protrusion unit.

The at least one rotation protrusion unit may be provided at a position between 0 degrees and 90 degrees.

According to an aspect of another example not falling within the scope of the claims, there is provided an adapter including: a body; at least one connector protruding from the body; a plug connected to the connector; a printed circuit board (PCB) disposed inside the body; at least one wire connecting the connector to the PCB; and a connector holder configured to accommodate and support the connector, the connector holder being rotatably installed in the body such that the connector holder is rotatable relative to the body.

The adapter may further include a guide member provided in the body and comprising at least one protrusion groove, wherein the connector holder includes at least one rotation protrusion formed along an outer circumferential surface of the connecter holder, and the at least one protrusion groove is configured to receive the at least one rotation protrusion.

The adapter may further include a cover coupled to the guide member, wherein the cover includes a wire accommodation unit in which the at least one wire is accommodated, and the wire accommodation unit has at least one wire hole through which the at least one wire extends.

The at least one wire may include two wires that are twisted with each other at least one twist inside the wire accommodation unit.

The body further may include a stopper configured to limit rotation of the connector holder. According to an aspect of another example not falling within the scope of the claims, there is provided an adapter including: a case; a connector; a connector holder in which the connector is installed; and a cover configured to accommodate the connector holder inside the case, wherein the connector holder is rotatable relative to the case and the cover.

The cover may include a wire accommodation unit in which at least one wire is accommodated, and the wire accommodation unit has at least one wire hole through which the at least one wire extends. The adapter may further include a printed circuit board disposed inside the case and connected to the connector via the at least one wire, wherein the at least one wire is twisted at least once within the cover.

### BRIEF DESCRIPTION OF THE DRAWINGS

The above and/or other aspects will become apparent and more readily appreciated from the following description of exemplary embodiments, taken in conjunction with the accompanying drawings of which:
FIG. 1 is a view illustrating a plug and an adapter in accordance with an exemplary embodiment,
FIG. 2 is an exploded-perspective view illustrating an adapter in accordance with an exemplary embodiment,
FIG. 3 is a view illustrating a connection pin rotatably installed in an adapter in accordance with an exemplary embodiment,
FIG. 4 is an exploded-perspective view illustrating a connection pin rotatably installed in a case base in accordance with an exemplary embodiment,
FIG. 5 is a partial cross-sectional view illustrating a connection pin, a rotation member, a guide member and a cover in accordance with an exemplary embodiment,
FIGS. 6-8 are views illustrating a rotation motion of a rotation member in accordance with an exemplary embodiment,
FIGS 9, 10 and 11 are views illustrating a variation of a rotation angle of a connection pin according to rotation of a rotation member, and an installation state of an adapter according to the variation of the rotation angle in accordance with an exemplary embodiment,
FIG. 12 is a partially exploded-perspective view illustrating an adapter in accordance with an exemplary embodiment,
FIGS. 13 and 14 are views illustrating a rotation motion of a connector holder in accordance with an exemplary embodiment, and
FIGS. 15, 16 and 17 are views illustrating a rotation step of a connector in accordance with exemplary embodiments.

### DETAILED DESCRIPTION

Hereinafter embodiments will be described with reference to drawings. In the following detailed description, the terms of "front end", "rear end", "upper portion", "lower portion", "upper end", "lower end" and the like may be defined by the drawings, but the shape and the location of the component is not limited by the term.

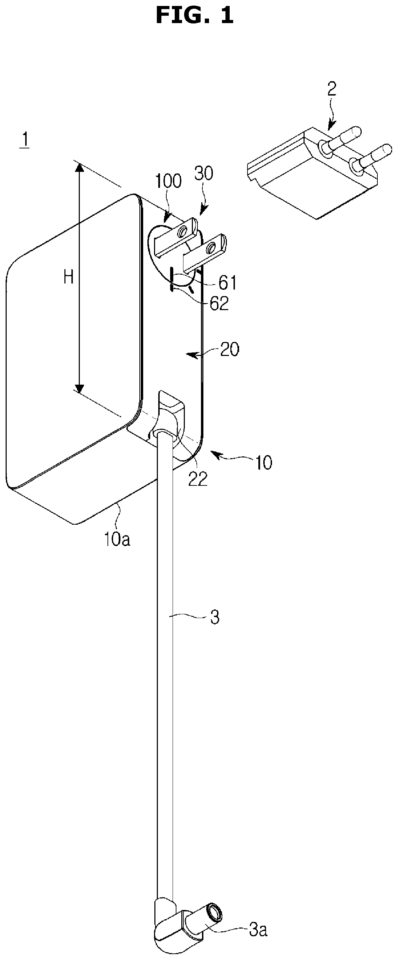

FIG. 1 is a view illustrating a plug and an adapter in accordance with an exemplary embodiment, and

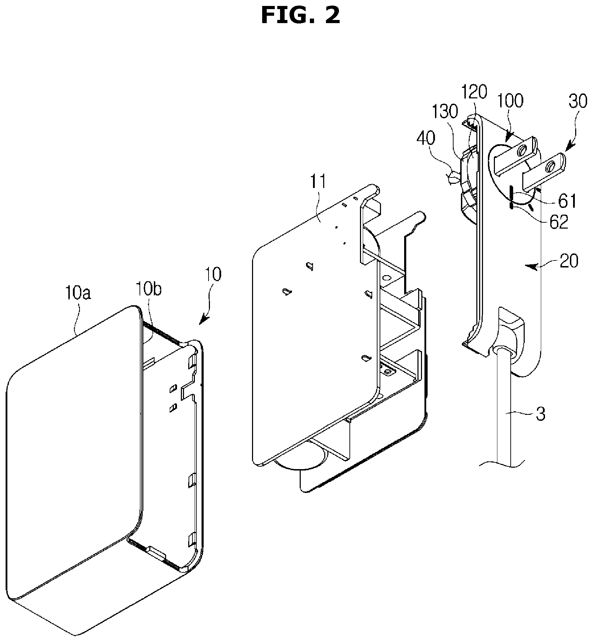

FIG. 2 is an exploded-perspective view illustrating an adapter in accordance with an exemplary embodiment.

As illustrated in FIGS. 1 and 2, an adapter 1 may include a case 10, a connection pin 30 installed in the case 10, and a plug 2 coupled to the connection pin 30.

In general, an AC/DC adapter (hereinafter referred to as "adapter 1") that is used for 110V and 220V may represent a rectifier configured to convert commercial voltage, that is AC 110V/220V into a certain DC voltage. The adapter 1 may be configured to allow a user to selectively use both of AC 110V and 220V through a switch conversion, and thus a pair of 110V type connection pins (hereinafter referred to as "connection pin 30") may be protruded in the case 10 of the adapter 1 for the use of 110V power.

The case 10 of the adapter 1 may be formed in an approximate hexahedral shape to have a space unit in which a printed circuit board (PCB) 11 is installed. The case 10 may include a body 10a and a case base 20 coupled to the case body 10a.

The case body 10a may have a hexahedral shape and may include at least one opening 10b. According to an exemplary embodiment, the case 10 may have one surface of an upper surface or a lower surface open, but is not limited thereto.

The case body 10a may be formed of insulation resin material, and thus may protect components, e.g., the PCB 11, etc., accommodated in the inner space, from the outside.

The case base 20 may be provided in the opening 10b of the case body 10a. The case base 20 may be provided to cover the opening 10b of the case body 10a. The case base 20 may be generally formed in a plate shape. A power line installation unit 22 to which the power line 3 that is configured to connect the adapter 1 to an electric device is connected may be formed in a lower end portion of the case base 20. The power line 3 may include an electric terminal 3a for connection with an electric device, particularly the electric terminal 3a is provided in a lower portion of the power line 3.

In the case base 20, a rotation member 100 in which at least one connection pin 30 is provided may be rotatably installed.

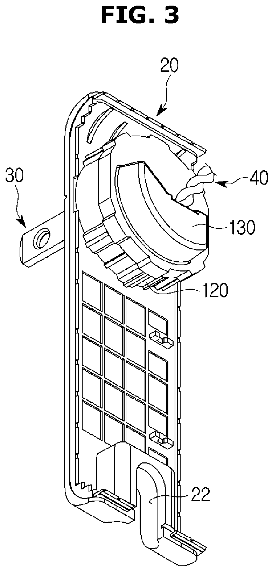

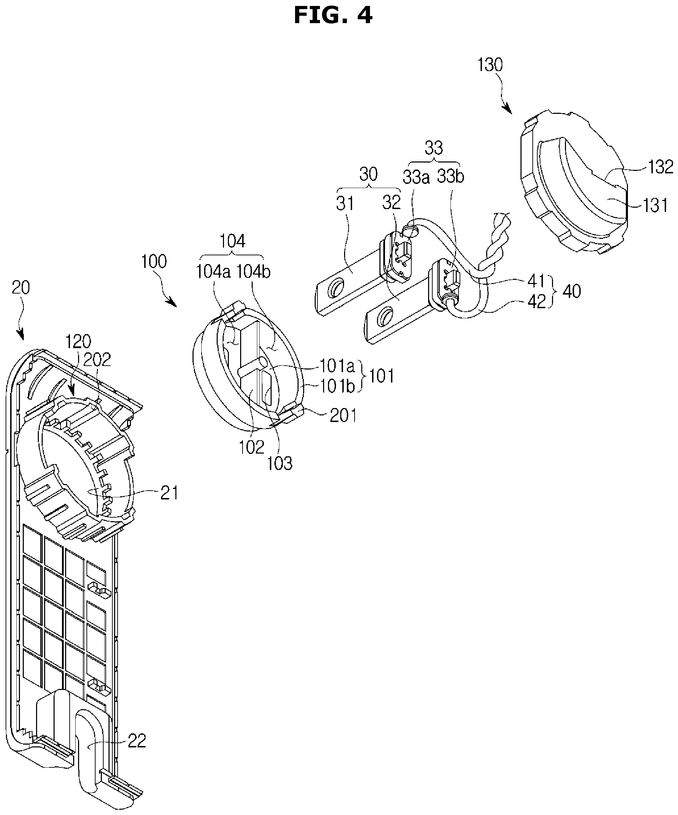

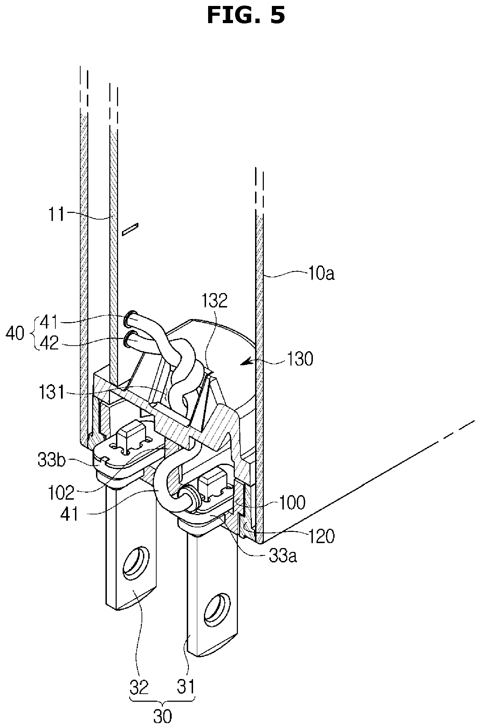

FIG. 3 is a view illustrating a connection pin rotatably installed in an adapter in accordance with an exemplary embodiment, FIG. 4 is an exploded-perspective view illustrating a connection pin rotatably installed in a case base in accordance with an exemplary embodiment, and FIG. 5 is a partial cross-sectional view illustrating a connection pin, a rotation member, a guide member and a cover in accordance with an exemplary embodiment.

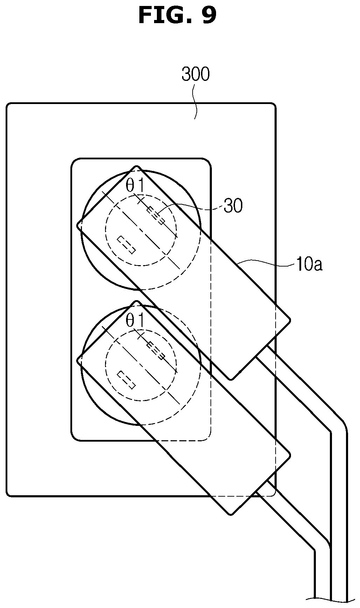

As illustrated in FIGS. 3-5, at least one connection pin 30 rotatably installed in the case base 20 may be provided. The connection pin 30 may be a pair of connection pins 30, particularly one of the pair of the connection pins 30 may be provided in the left side and the right side, respectively. The connection pins 30 may include a first pin 31 provided in the right side, and a second pin 32 provided in the left side. The first pin 31 and the second pin 32 may be provided in parallel to each other. The first pin 31 and the second pin 32 may be formed of conductive material and formed in a stick shape. One end portion of the first pin 31 and the second pin 32 may be coupled to the case base 20 and the other end portion thereof may be exposed to the outside of the case base 20. The first pin 31 and the second pin 32 exposed to the outside of the case base 20 may be coupled to the plug 2 and then inserted into an electric outlet 300 thereby being supplied with the power (refer to FIG. 9).

The first pin 31 and the second pin 32 may be connected to a wire 40 via a connection member 33. The connection member 33 may include a first connection unit 33a connected to the first pin 31 and a second connection unit 33b connected to the second pin 32. Each of the connection pins 30 may be physically connected to the wire 40 via the connection member 33.

At least one wire 40 may be provided. The wire 40 may include a first wire 41 connected to the first pin 31 via the first connection unit 33a and a second wire 42 connected to the connection member 33 via the second connection unit 33b.

In this case, the first connection unit 33a and the second connection unit 33b may be disposed in a direction that is symmetrical with each other. According to a symmetrical position of the first connection unit 33a and the second connection unit 33b, the first wire 41 and the second wire 42 connected to the first connection unit 33a and the second connection unit 33b, respectively may be also disposed in a direction that is symmetrical with each other. According to an exemplary embodiment, the first connection unit 33a and the second connection unit 33b may be disposed in a direction that is symmetrical with each other, but is not limited thereto. For example, the first connection unit and the second connection unit may be disposed to be parallel to each other.

The first pin 31 and the second pin 32 may be connected to the PCB 11 placed inside of the case body 10a via the connection member 33 and the wire 40 so that the first pin 31 and the second pin 32 may be physically and electrically connected to the PCB 11.

The connection pin 30 may be rotatably installed in the case base 20 via the rotation member 100.

The rotation member 100 may be relatively rotatable against the case base 20, and may include at least one connection pin 30. The rotation member 100 may include a rotation body 101. The rotation body 101 may have a cylindrical shape. The rotation body 101 may include a first body 101a having a circular plate shape and a second body 101b having a ring shape.

A pin installation hole 103 may be provided in the first body 101a so that the first pin 31 and the second pin 32 are inserted thereto. At least one of the pin installation hole 103 may be provided so that the first pin 31 and the second pin 32 are inserted thereto, respectively. The pin installation hole 103 may be provided in a pair so that the first pin 31 and the second pin 32 are inserted thereto, respectively. The pin installation hole 103 may be formed in a way that a pair of the pin installation holes 103 is disposed to be parallel to each other so that the first pin 31 and the second pin 32 are disposed to be parallel to each other.

The second body 101b may be extended from an edge of the first body 101a. The second body 101b may form a wire installation unit 104 provided to be divided in the inside.

The rotation member 100 may include one or more rotation protrusions 201. The rotation protrusions 201 may be formed apart from each other in a circumferential direction on an outer circumferential surface of the second body 101b. For example, two rotation protrusions 201 may be disposed to be symmetrical with and face each other. Although two rotation protrusions 201 are provided in the exemplary embodiment, embodiments are not limited thereto.

The wire installation unit 104 may include a first wire installation unit 104a in which the first pin 31, the first connection unit 33a and the first wire 41 are installed and a second wire installation unit 104b in which the second pin 32, the second connection unit 33b and the second wire 42 are installed.

The first wire installation unit 104a and the second wire installation unit 104b may be divided into by a partition wall 102. The partition wall 102 may be provided between the first wire installation unit 104a and the second wire installation unit 104b. The partition wall 102 may allow the first wire installation unit 104a and the second wire installation unit 104b to be symmetrical. The partition wall 102 may be disposed on the center of the second body 101b. A rotation axis (C) may be formed in the center of the partition wall 102, wherein the rotation axis (C) becomes the center of the rotation when the rotation member 100 is rotated.

Therefore, the first pin 31 passing through the pin installation hole 103 formed in the first wire installation unit 104a of the rotation member 100 may be installed in the first wire installation unit 104a together with the first connection unit 33a and the first wire 41, and the second pin 32 passing through the pin installation hole 103 formed in the second wire installation unit 104b may be installed in the second wire installation unit 104b together with the second connection unit 33b and the second wire 42.

In this case, the first wire 41 connected to the first connection unit 33a and the second wire 42 connected to the second connection unit 33b may be divided by the partition wall 102 and thus it may be prevented that the first wire 41 makes contact with the second wire 42 when a wire is disconnected from the connection unit.

An installation hole 21 may be formed in the case base 20 so that the rotation member 100 is rotatably installed thereto. The installation hole 21 may be formed to pass through at least one portion of the case base 20. The installation hole 21 may have the size and the shape corresponding to the rotation member 100 to allow the rotation member 100 to be rotatably installed.

Therefore, the rotation member 100 in which the connection pin 30 is coupled thereto via the installation hole 21 of the case base 20 may be protruded to the outside of the case base 20 so as to be exposed to the outside, and the connection pin 30 that is exposed to the outside of the case base 20 may be coupled to a plug 2 that is detachably provided.

The plug 2 may be formed of an insulation material. A plug terminal formed of conductive material may be provided in the plug 2 so that the plug 2 may be connected to the connection pin 30. The plug terminal may be connected to the connection pin 30 of the adapter 1 to allow the plug 2 and the adapter 1 to be physically and electrically connected.

A guide member 120 configured to guide the rotation of the rotation member 100 may be provided on a rear surface of the installation hole 21 of the case base 20. The guide member 120 may be formed to correspond to the size and the shape of the installation hole 21.

The guide member 120 may be formed in a circular ring shape. The guide member 120 may be formed to have the size and the shape corresponding to the rotation member 100 so that the rotation member 100 is inserted into an inner circumferential surface of thereof and then rotated. According to an exemplary embodiment, the guide member 120 may be integrally formed with the case base 20, but is not limited thereto. For example, the guide member 120 may be separately provided from the case base 20.

The guide member 120 may include one or more rotation protrusion grooves 202 that are provided to correspond to the one or more rotation protrusions 201 of the rotation member 100. At least one of the rotation protrusion grooves 202 of the guide member 120 is provided between 0 (zero) degrees and 90 degrees about the rotation axis (C).

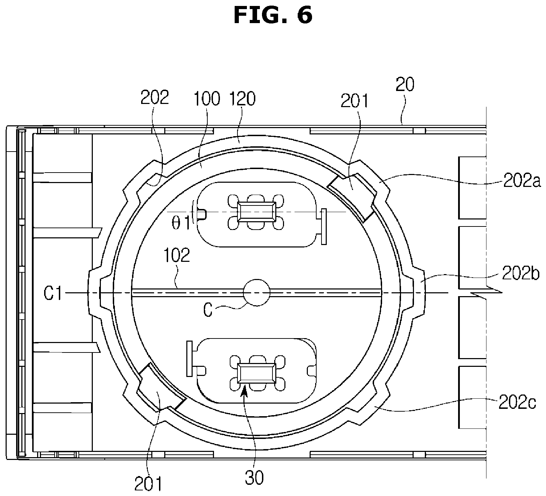

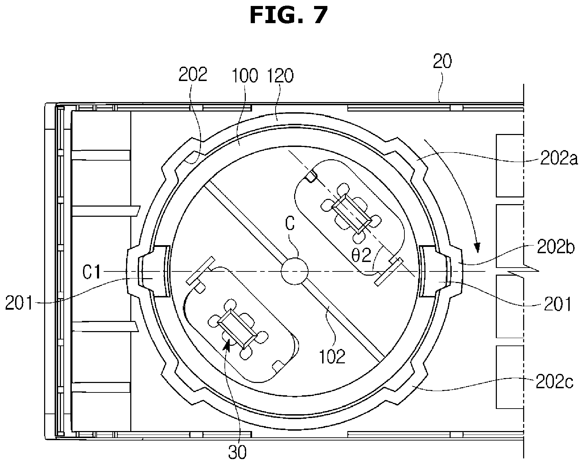

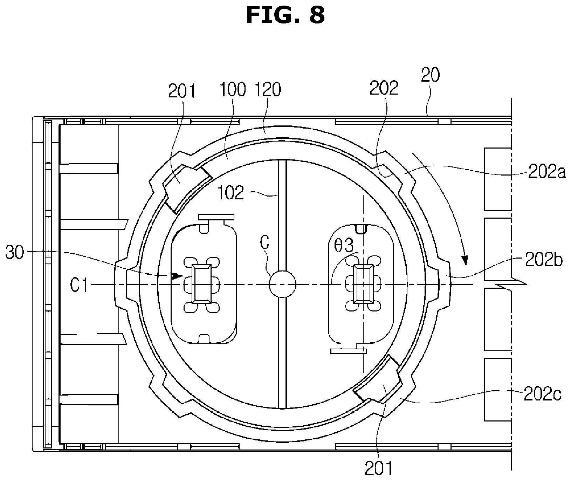

The rotation protrusion grooves 202 of the guide member 120 may include a first rotation protrusion groove 202a, a second rotation protrusion groove 202b, and a third rotation protrusion groove 202c. As shown in FIGS. 6, 7 and 8, the first rotation protrusion groove 202a may be formed to allow the connection pin 30 to be in an angular position (θ1) relative to a plane (C1) of the case body 10a in which the connection pin 30 is disposed parallel to (0 (zero) degrees) a the plane (C1) while the connection pin 30 is not rotated. The second rotation protrusion groove 202b may be formed to allow the connection pin 30 to be in an angular position (θ2) relative to the plane (C1) and the first rotation protrusion groove 202a. The third rotation protrusion groove 202c may be formed to allow the connection pin 30 to be in an angular position (θ3) relative to a plane C1 and the first rotation protrusion groove 202a.

During the rotation member 100 is rotated, the rotation protrusion 201 may be coupled and fixed to at least one of the rotation protrusion grooves 202 of the guide member 120.

A cover 130 may be provided in the rear side of the guide member 120. A wire accommodation unit 131 in which at least one wire 40 is accommodated may be provided in the cover 130. The wire accommodation unit 131 includes a wire hole 132 through which the at least one wire 40 extends such that the at least one wire 40 may be connected to the PCB 11.

The at least one wire 40 may be crossed to form a twisted shape. The first wire 41 and the second wire 42 may be crossed with each other inside of the wire accommodation unit 131 so as to be formed in a twisted shape having at least one twist.

The wire accommodation unit 131 of the cover 130 may be formed to have a certain space unit to allow the at least one wire 40 to be twisted and placed therein. The wire accommodation unit 131 may be formed to have a certain height that is a height of the twisted at least one wire, or more than the height so that the at least one wire 40 is disposed to be in the twisted shape.

The cover 130 may accommodate and support the at least one wire 40 in the wire accommodation unit 131 to protect the wire 40 to prevent the disconnection and the connection of the wire 40. The cover 130 may be coupled to the guide member 120 in the rear side of the guide member 120. The cover 130 may be fixed to the guide member 120 to accommodate the rotation member 100 inside of the guide member 120.

FIGS. 6-8 are views illustrating a rotation motion of a rotation member in accordance with an exemplary embodiment.

As illustrated in FIGS. 6-8, a state of the connection pin 30 according to a rotation motion of the rotation member 100 and the guide member 120 will be described.

The rotation protrusion grooves 202 of the guide member 120 may include the first rotation protrusion groove 202a, the second rotation protrusion groove 202b, and the third rotation protrusion groove 202c.

The first rotation protrusion groove 202a may be formed to allow the connection pin 30 to be in a position (an initial position and 0 (zero) degrees) in which the connection pin 30 is disposed to be parallel to the plane (C1) of the case body 10a while the connection pin 30 is not rotated.

The second rotation protrusion groove 202b may be formed apart with a certain angle (45 degrees from the initial position) from the first rotation protrusion groove 202a. When the rotation protrusion 201 of the rotation member 100 is placed in the second rotation protrusion groove 202b, the connection pin 30 may be moved together with the rotation member 100 and then rotated with a certain angle.

The third rotation protrusion groove 202c may be formed apart with a certain angle (90 degrees from the initial position) from the second rotation protrusion groove 202b. When the rotation protrusion 201 of the rotation member 100 is placed in the third rotation protrusion groove 202c, the connection pin 30 may be moved together with the rotation member 100 and then rotated with a certain angle.

The rotation member 100 may include a first position indicator 61 configured to indicate a rotation state. The first position indicator 61 may be formed on an outer surface of the first body 101a of the rotation member 100. When the rotation protrusion 201 of the rotation member 100 is coupled to the first rotation protrusion groove 202a of the guide member 120, the first position indicator 61 may be displayed to be parallel to the height (H) of the case body 10a.

A second position indicator 62 corresponding to the first position indicator 61 may be formed in the case base 20. The second position indicator 62 may be formed adjacent to an outer circumference of the rotation member 100 to display a rotation angle of the rotation member 100. According to an exemplary embodiment, the second position indicator 62 may include a plurality of graduations, e.g., 0 (zero) degrees, 45 degrees, 90 degrees, etc., but embodiments are not limited thereto.

FIGS 9-11 are views illustrating a variation of a rotation angle of a connection pin according to a rotation of a rotation member, and an installation state of an adapter according to the variation of the rotation angle in accordance with an exemplary embodiment.

As illustrated in FIGS. 9-11, the adapter 1 that is configured to receive the power by being inserted into an electric outlet 300 provided in the outside may include the connection pin 30 that is rotatably installed thereto.

In general, the electric outlet 300 may be a device configured to allow electricity to be transferred in a way that the connection pin 30 or the plug 2 is inserted thereinto, and may be provided to allow a plurality of the connection pin 30 or the plug 2 to be inserted thereinto at the same time. In this case, the electric outlet 300 may be disposed to be parallel to each other so that a plurality of the connection pin 30 or the plug 2 is inserted thereinto at the same time.

According to an exemplary embodiment, a plurality of the adapters 1 may be installed in the electric outlet 300, which is disposed to be parallel to each other, in a variety of directions due to the connection pin 30 that is rotatable, and thus the adapter 1 may be not interfered with each other.

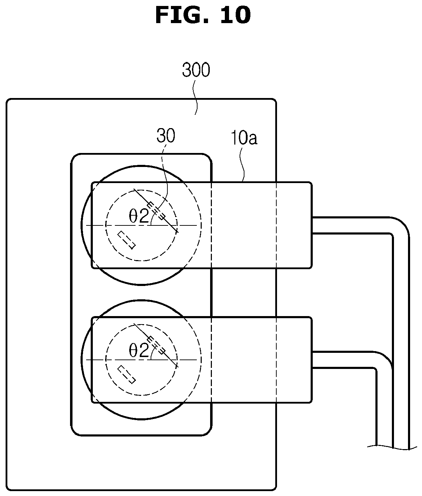

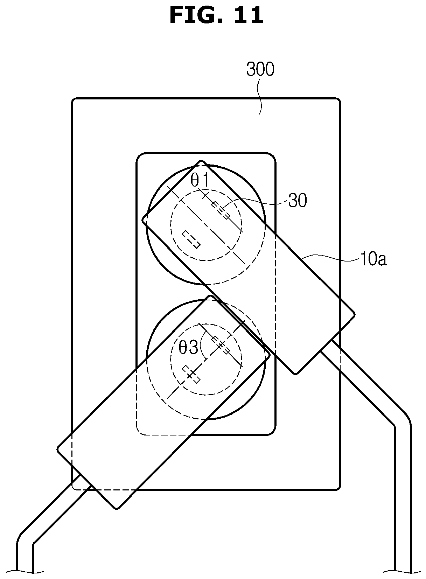

For example, according to an embodiment, the adapters 1 may be installed in a state, wherein the state includes a basic arrangement state in which the rotation members 100 are not rotated (refer to FIG. 9), a state in which the rotation members 100 are rotated with a certain angle (θ2) and thus the connection pin 30 is installed in the electric outlet 300 while the connection pin 30 is rotated with 45 degree (refer to FIG. 10), and a proper combination state of a state in which the rotation member 100 is not rotated and a state in which the other rotation member 100 is rotated with a certain angle (θ3) and thus the connection pin 30 is installed in the electric outlet 300 while the connection pin 30 is rotated with 90 degree (refer to FIG. 11).

Therefore, the usability of the adapter 1 may be improved since there may be no limitation in the size and the installation direction of the adapter 1.

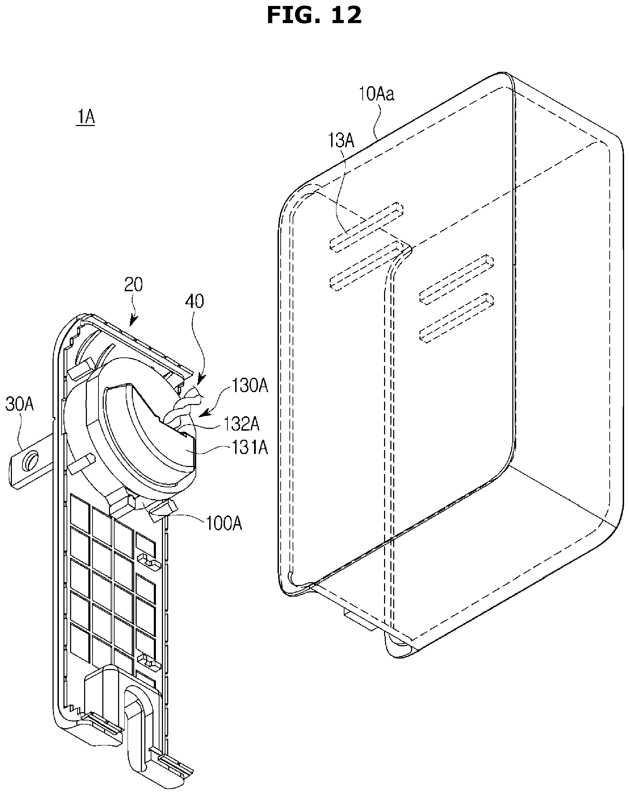

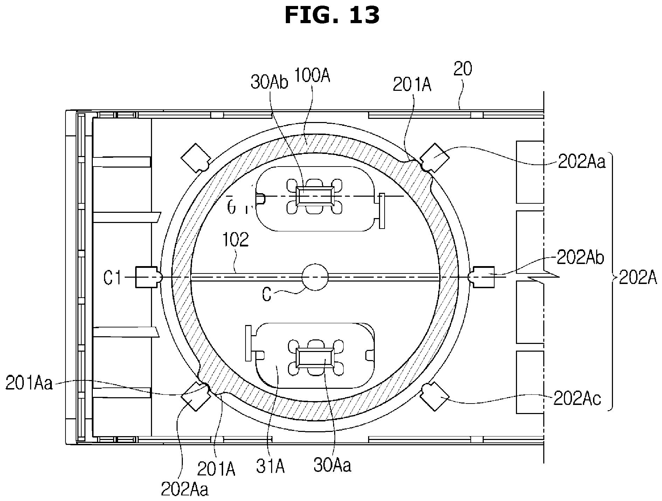

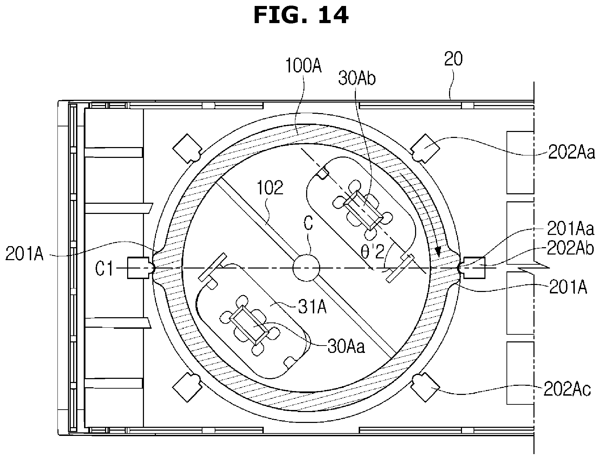

FIG. 12 is a view illustrating a connector rotatably installed in an adapter in accordance with an exemplary embodiment, and FIGS. 13 and 14 are views illustrating a rotation motion of a connector holder in accordance with another embodiment. Reference numerals that are not illustrated in the drawings may refer to FIGS. 1-11.

As illustrated in FIGS. 12, 13 and 14, an adapter 1A may include at least one connector 30A rotatably installed in a case body 10Aa.

The adapter 1A may include the case body 10Aa, the connector 30A protruded toward the outside of the case body 10Aa, and a plug 2 connected to the connector 30A.

The connector 30A may include a first connection pin 30Aa and a second connection pin 30Ab are provided in the left side and the right side, respectively. The first connection pin 30Aa and the second connection pin 30Ab may be provided in parallel to each other. The first connection pin 30Aa and the second connection pin 30Ab may be formed of conductive material and formed in a stick shape.

The connector 30A may be coupled by a connector holder 100A. One end portion of the connector 30A may be rotatably installed to the case base 20 by the connector holder 100A, and the other end portion thereof may be exposed to the outside of the case base 20. The first connection pin 30Aa and the second connection pin 30Ab exposed to the outside of the case base 20 may be coupled to the plug 2 and then inserted into an electric outlet 300 thereby being supplied with the power.

The connector 30A may be connected to a connector connection unit 31A via a wire 40. The connector 30A may be connected to a PCB 11 inside of the case body 10Aa via the connector connection unit 31A so as to be physically and electrically connected to the PCB 11.

The connector holder 100A may be provided to be relatively rotatable against the case body 10Aa, and may accommodate and support the connector 30A. The connector holder 100A may be provided to be relatively rotatable against the case base 20. The connector holder 100A may be formed in a cylindrical shape. The connector holder 100A may include a pin installation hole 103 to allow the connector 30A to be inserted thereto. In an edge of the connector holder 100A, at least one rotation groove unit 201A may be formed apart from each other in a circumferential direction of the connector holder 100A. The rotation groove unit 201A may include a groove 201Aa recessed inward of the rotation groove unit 201A. The at least one of the rotation groove unit 201A may be formed on an outer circumferential surface of the connector holder 100A in an outward direction. For example, two rotation groove units 201A may be provided to be symmetrical with and to face each other. According to the exemplary embodiment, two rotation groove units 201A may be provided to face to each other, but embodiments are not limited thereto.

On a rear surface of the installation hole 21 of the case base 20, a rotation protrusion unit 202A configured to guide a rotation of the connector holder 100A may be provided. The rotation protrusion unit 202A may be disposed on a rotation path of the connector holder 100A. The rotation protrusion unit 202A may include a plurality of protrusions 202Aa, 202Ab, and 202Ac. The protrusions 202Aa, 202Ab, and 202Ac of the rotation protrusion unit 202A may be formed to have a shape corresponding to the groove 201Aa formed in the rotation groove unit 201A.

At least one of the protrusions 202Aa, 202Ab, and 202Ac of the rotation protrusion unit 202A may be provided. At least one of the protrusions 202Aa, 202Ab, and 202Ac of the rotation protrusion unit 202A is provided between 0 (zero) degrees and 90 degrees.

The protrusions 202Aa, 202Ab, and 202Ac of the rotation protrusion unit 202A may include a first rotation protrusion 202Aa, a second rotation protrusion 202Ab, and a third rotation protrusion 202Ac. The first rotation protrusion 202Aa may be formed to allow the connector 30A installed in the connector holder 100A to be in a position (θ'1) in which the connector 30A is disposed to be parallel to a plane (C1) of the case body 10Aa (0 (zero) degrees) while the connector 30A is not rotated. The second rotation protrusion 202Ab may be formed apart with a certain angle (θ'2) from the first rotation protrusion 202Aa, and the third rotation protrusion groove 202Ac may be formed apart with a certain angle (θ'3) from the first rotation protrusion 202Aa.

As the connector holder 100A is rotated, the rotation groove unit 201A may be coupled to at least one of protrusion of the rotation protrusion unit 202A so that a position of the connector holder 100A may be fixed.

A cover 130A may be provided in the rear side of the connector holder 100A. A wire accommodation unit 131A in which at least one wire 40 is accommodated may be provided in the cover 130A. The wire accommodation unit 131A includes a wire hole 132A through which the at least one wire 40 extends such that the at least one wire 40 may be connected to the PCB 11.

The at least one wire 40 may be crossed to form a twisted shape. The first wire 41 and the second wire 42 may be crossed with each other inside of the wire accommodation unit 131A so as to be formed in a twisted shape having at least one twist.

The wire accommodation unit 131A of the cover 130A may be formed to have a certain space unit to allow the at least one wire 40 to be twisted and placed therein. The wire accommodation unit 131A may be formed to have a certain height that is a height of the twisted at least one wire, or more than the height so that the at least one wire 40 is disposed to be in the twisted shape.

The cover 130A may be fixed by a fixation protrusion 13A formed inside of the case body 10Aa. The cover 130A may be fixed by the fixation protrusion 13A to accommodate and support the connector holder 100A.

An installation hole 21 may be formed in the case base 20 to allow the connector holder 100A to be rotatably installed. The installation hole 21 may be formed to pass through at least one portion of the case base 20. The installation hole 21 may be formed to have the size and the shape corresponding to the connector holder 100A so that the connector holder 100A may be rotatably installed therein.

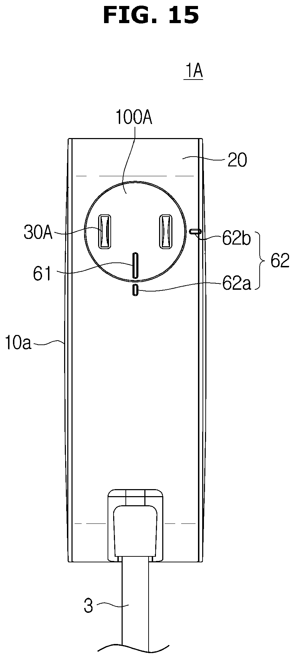

FIGS. 15-17 are views illustrating a rotation step of a connector in accordance with exemplary embodiments.

As illustrated in FIGS. 15-17, the adapter 1A may include a first position indicator 61 to display a rotation state. The first position indicator 61 may be formed on an outer surface of the connector holder 100A.

A second position indicator 62 corresponding to the first position indicator 61 may be formed on the case base 20. The second position indicator 62 may be provided adjacent to an outer circumference of the connector holder 100A to display a rotation angle of the connector holder 100A.

For example, in as shown in FIG. 15, the second position indicator 62 may include a first indicator 62a in which the connector holder 100A is not moved, that is the connector holder 100A is at 0 (zero) degrees of rotation, and a second indicator 62b in which the connector holder 100A is in a state in which the connector holder 100A is rotated 90 degrees from an initial position.

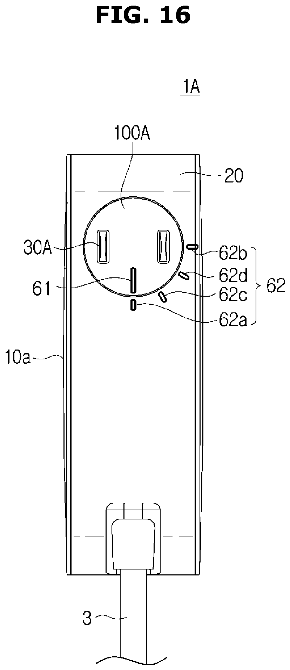

Alternatively, in another exemplary embodiment shown in FIG. 16, the second display unit 62 may include a first indicator 62a in which the connector holder 100A is not moved, that is the connector holder 100A is at 0(zero) degrees of rotation, a second indicator 62b in which the connector holder 100A is in a state in which the connector holder 100A is rotated 90 degrees from an initial position, a third indicator 62c in which the connector holder 100A is in a state in which the connector holder 100A is rotated 30 degrees from the initial position, and a fourth indicator 62d in which the connector holder 100A is in a state in which the connector holder 100A is rotated 60 degrees from the initial position.

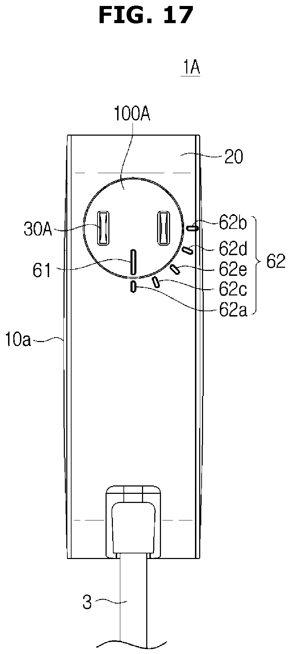

Alternatively, in another exemplary embodiment shown in FIG. 17, the second position indicator 62 may include from a first indicator 62a, a second indicator 62b, a third indicator 62c, a fourth indicator 62d, and a fifth indicator 62e, wherein each indicator indicates a state in which the connector holder 100A is incrementally rotated 22.5 degrees from an initial position.

According to the exemplary embodiments, the second position indicator 62 may include at least two and up to five indicators including at least one at a rotation angle of 0 (zero) degrees, 22.5 degrees, 45 degrees, 67.5 degrees, and 90 degrees, but embodiments are not limited thereto. For example, a rotation angle of the connector holder may be set and fixed to have a variation.

In addition, the body 10Aa may further comprise a stopper configured to limit a rotation of the connector holder.

According to exemplary embodiments, since the connector 30A and the plug 2 that is coupled to the connector 30A are rotatable due to the rotation of the connector holder 100A, a plurality of the adapters 1A may be installed in the electric outlet 300 disposed to be parallel to each other in various directions and thus the plurality of the adapters 1A may be not interfered with each other.

Therefore, there may be no limitation in the size and the installation direction of the adapter 1A, and thus the usability of the adapter 1A may be improved.

As is apparent from the above description, according to the proposed adapter, the user convenience may be improved due to a rotatable plug.

A plurality of adapters may be used regardless of an arrangement of a multi tap outlet due to a plug that is rotatable by angle and by step-by-step, and thus the user's ease of use may be improved.

In addition, when using a plurality of adapters, a plug may be strongly fixed to a multi tap outlet after being rotated, and thus the reliability may be improved.

Although a few exemplary embodiments have been shown and described, it would be appreciated by those skilled in the art that changes may be made in these embodiments without departing from the scope of the claims and their equivalents.

## Claims

1. An adapter (1) comprising:
a case (10, 10a 10Aa) forming an exterior;
a rotation member provided to be relatively rotatable against the case;
at least one connection pin (30, 31, 30Aa, 30Ab) installed in the rotation member; and
a guide member configured (120) to guide rotation of the rotation member in the inside of the case.
**characterized in that**:
a printed circuit board (PCB) is provided inside the case, wherein the connection pin (30, 31) is connected to the PCB via at least one wire (40, 41, 42); and
the guide member (120) comprises a cover (130) provided with a wire accommodation unit (131) in which the at least one wire (40, 41, 42) is accommodated and wherein the cover (130) comprises at least one wire hole (132).

2. The adapter of claim 1, wherein the rotation member comprises at least one rotation protrusion (201, 202Aa, 202Ab, 202Ac) formed at an outer circumferential surface of the rotation member, and
the guide member comprises at least one rotation protrusion groove (202, 202a, 202b, 202c, 201Aa) formed to receive to the rotation protrusion.

3. The adapter of claim1, having at least two wires connecting the connection pin (30, 31) and PCB, wherein the at least two wires has at least one twist by being twisted with each other inside the wire accommodation unit.

4. The adapter of claim 2, wherein the case has an open surface, and a case base configured to cover the open surface of the case body and provided with an installation hole configured to allow the rotation member to be rotatably installed therein.

5. The adapter of claim 4,
wherein the rotation member comprises a position indicator (61) configured to indicate a rotation state, and
wherein a second position (62) indicator corresponding to the first position indicator is formed on the case base (20) to display a rotation angle of the rotation member.

6. The adapter of claim 5,
wherein the second position indicator is provided between 0 degrees and 90 degrees.

7. The adapter of claim 1 further comprising:
a plug rotatably connected to the case by being coupled to the connection pin.

8. The adapter of claim 1, wherein the rotation member comprises a rotation groove unit including at least groove formed at an outer circumferential surface of the rotation member, wherein at least one rotation protrusion unit, that is disposed on a rotation path of the rotation groove unit to correspond to the at least one groove, is formed at an inner circumferential surface of the case.

9. The adapter of claim 8,
wherein the at least one rotation protrusion is provided between 0 degrees and 90 degrees.

## Patentansprüche

1. Adapter (1), der Folgendes umfasst:
ein Gehäuse (10, 10a, 10Aa), das ein Äußeres bildet;
ein Drehelement, das bereitgestellt ist, um gegen das Gehäuse relativ drehbar zu sein;
mindestens einen Verbindungsstift (30, 31, 30Aa, 30Ab), der in das Drehelement eingebaut ist; und
ein Führungselement (120), das dazu ausgelegt ist, eine Drehung des Drehelements im Inneren des Gehäuses zu führen,
**dadurch gekennzeichnet, dass**:
im Inneren des Gehäuses eine gedruckte Leiterplatte bereitgestellt ist, wobei der Verbindungsstift (30, 31) mit der gedruckten Leiterplatte über mindestens einen Draht (40, 41, 42) verbunden ist; und
das Führungselement (120) eine Abdeckung (130) umfasst, die mit einer Drahtaufnahmeeinheit (131) versehen ist, in der mindestens ein Draht (40, 41, 42) untergebracht ist, und wobei die Abdeckung (130) mindestens ein Drahtloch (132) umfasst.

2. Adapter nach Anspruch 1, wobei das Drehelement mindestens einen Drehvorsprung (201, 202Aa, 202Ab, 202Ac) umfasst, der an einer äußeren Umfangsoberfläche des Drehelements ausgebildet ist, und
das Führungselement mindestens eine Drehvorsprungsnut (202, 202a, 202b, 202c, 201Aa) umfasst, die ausgebildet ist, um den Drehvorsprung aufzunehmen.

3. Adapter nach Anspruch 1, der mindestens zwei Drähte umfasst, die den Verbindungsstift (30, 31) und die gedruckte Leiterplatte verbinden, wobei die mindestens zwei Drähte mindestens eine Verdrillung haben, durch die sie im Inneren der Drahtaufnahmeeinheit miteinander verdrillt sind.

4. Adapter nach Anspruch 2, wobei das Gehäuse eine offene Oberfläche aufweist und eine Gehäusebasis, die dazu ausgelegt ist, die offene Oberfläche des Gehäusekörpers abzudecken, und mit einem Einbauloch versehen ist, das dazu ausgelegt ist, dem Drehelement zu gestatten, drehbar darin eingebaut zu sein.

5. Adapter nach Anspruch 4,
wobei das Drehelement eine Positionsanzeige (61) umfasst, die dazu ausgelegt ist, einen Drehstatus anzugeben, und
wobei eine zweite Positionsanzeige (62), die mit der ersten Positionsanzeige korrespondiert, auf der Gehäusebasis (20) ausgebildet ist, um einen Drehwinkel des Drehelements anzuzeigen.

6. Adapter nach Anspruch 5,
wobei die zweite Positionsanzeige zwischen 0 Grad und 90 Grad bereitgestellt ist.

7. Adapter nach Anspruch 1, der ferner Folgendes umfasst:
einen Stopfen, der dadurch drehbar mit dem Gehäuse verbunden ist, dass er mit dem Verbindungsstift gekoppelt ist.

8. Adapter nach Anspruch 1, wobei das Drehelement eine Drehnuteinheit umfasst, die mindestens eine Nut beinhaltet, die an einer äußeren Umfangsoberfläche des Drehelements ausgebildet ist, wobei mindestens eine Drehvorsprungeinheit, die auf einem Drehpfad der Drehnuteinheit verläuft, um mit der mindestens einen Nut zu korrespondieren, an einer inneren Umfangsoberfläche des Gehäuses ausgebildet ist.

9. Adapter nach Anspruch 8,
wobei der mindestens eine Drehvorsprung zwischen 0 Grad und 90 Grad bereitgestellt ist.

## Revendications

1. Adaptateur (1) comprenant :
un boîtier (10, 10a, 10Aa) constituant l'extérieur ;
un élément de rotation disposé pour pouvoir tourner par rapport au boîtier ;
au moins une fiche de branchement (30, 31, 30Aa, 30Ab) installée dans l'élément de rotation ; et
un élément guide (120) configuré pour guider la rotation de l'élément de rotation à l'intérieur du boîtier,
**caractérisé en ce que** :
une carte de circuit imprimé (PCB) est disposée à l'intérieur du boîtier, dans lequel la fiche de branchement (30, 31) est raccordée à la carte par l'intermédiaire d'au moins un fil (40, 41, 42) ; et
l'élément guide (120) comprend un couvercle (130) pourvu d'une unité d'accueil (131) de fil dans laquelle se loge ledit fil (40, 41, 42) et dans lequel le couvercle (130) comprend au moins un trou (132) de fil.

2. Adaptateur selon la revendication 1, dans lequel :
l'élément de rotation comprend au moins une saillie de rotation (201, 202Aa, 202Ab, 202Ac) formée au niveau de la surface périphérique extérieure de l'élément de rotation, et
l'élément guide comprend au moins une rainure (202, 202a, 202b, 202c, 201Aa) de saillie de rotation constituée pour recevoir la saillie de rotation.

3. Adaptateur selon la revendication 1, comportant au moins deux fils raccordant la fiche de branchement (30, 31) à la carte, dans lequel lesdits fils comportent au moins une torsion en étant torsadés l'un avec l'autre à l'intérieur de l'une unité d'accueil de fil.

4. Adaptateur selon la revendication 2, dans lequel le boîtier comporte une surface ouverte et une base de boîtier configurée pour couvrir la surface ouverte du corps de boîtier et pourvue d'un trou d'installation configuré pour permettre d'y installer rotatif l'élément de rotation.

5. Adaptateur selon la revendication 4, dans lequel l'élément de rotation comprend un indicateur de position (61) configuré pour indiquer l'état de rotation et
dans lequel un second indicateur de position (62) en correspondance avec le premier indicateur de position est formé sur la base (20) de boîtier pour afficher l'angle de rotation de l'élément de rotation.

6. Adaptateur selon la revendication 5, dans lequel le second indicateur de position est disposé entre 0 degré et 90 degrés.

7. Adaptateur selon la revendication 1, comprenant en outre une prise raccordée rotative au boîtier par accouplement à la fiche de branchement.

8. Adaptateur selon la revendication 1, dans lequel l'élément de rotation comprend une unité de rainures de rotation comprenant au moins une rainure pratiquée au niveau de la surface périphérique extérieure de l'élément de rotation, dans lequel au moins une unité de saillies de rotation, qui est disposée sur le trajet de rotation de l'unité de rainures de rotation pour correspondre à ladite rainure, est constituée au niveau de la surface périphérique intérieure du boîtier.

9. Adaptateur selon la revendication 8, dans lequel ladite saillie de rotation est disposée entre 0 degré et 90 degrés.
